# FASCICULE DE BREVET EUROPEEN

(11) **EP 3 017 235 B1**
(45) Date de publication et mention de la délivrance du brevet: **14.08.2019**
(21) Numéro de dépôt: 14733231.6
(22) Date de dépôt: 28.05.2014
(51) Int. Cl.: F17C 5/00, F17C 5/06

(54) **PROCÉDÉ ET STATION DE REMPLISSAGE DE RÉSERVOIR DE GAZ**
VERFAHREN UND STATION ZUR BEFÜLLUNG VON GASTANKS
METHOD AND STATION FOR FILLING GAS TANKS

(30) Priorité: 05.07.2013 FR 1356618
(43) Date de publication de la demande: 11.05.2016
(73) Titulaire: L'Air Liquide Société Anonyme pour l'Etude et l'Exploitation des Procédés Georges Claude, 75007 Paris (FR)
(72) Inventeur: ALLIDIERES, Laurent, F-38410 Saint Martin D'Uriage (FR)
(74) Mandataire: De Cuenca, Emmanuel Jaime
(86) Numéro de dépôt international: PCT/FR2014/051264
(87) Numéro de publication internationale: WO 2015/001208

(56) Documents cités:
- WO-A1-2012/147340
- FR-A1- 2 919 375
- FR-A1- 2 928 716
- FR-A1- 2 960 041
- FR-A1- 2 973 858

## Description

La présente invention concerne un procédé et une station de remplissage de réservoir de gaz.

L'invention concerne plus particulièrement un procédé de remplissage d'un réservoir avec de l'hydrogène sous pression via une station de remplissage comprenant au moins un contenant tampon et un circuit fluidique relié audit au moins un contenant tampon, le circuit de la station de remplissage comprenant une première extrémité reliée à au moins une source d'hydrogène gazeux pour assurer le remplissage du au moins un contenant tampon par du gaz provenant de la source, le circuit comprenant une seconde extrémité munie d'une conduite de transfert destinée à être reliée de façon amovible au réservoir à remplir avec de l'hydrogène provenant du au moins un contenant tampon, le procédé comprenant une étape de refroidissement de l'hydrogène fourni au réservoir par transfert de frigories entre une source froide et l'hydrogène.

Le remplissage rapide (typiquement en moins de 15 minutes) de réservoirs de gaz carburant (hydrogène notamment) à haute pression (300 à 800 bar par exemple) est réalisé généralement par des équilibrages successifs entre des contenants tampons à haute pression (par exemple 200, 300, 450 ou 850 bar) et le réservoir à remplir. Ce remplissage peut le cas échéant être complété ou suppléé par un ou plusieurs compresseurs.

Pour limiter l'augmentation de température dans les réservoirs du fait du caractère adiabatique de la compression, le gaz carburant est refroidi, par exemple à une température de l'ordre de -40°C avant son entrée dans le réservoir. Ce refroidissement est généralement réalisé via un échangeur de chaleur alimenté par un fluide frigorifique ou cryogénique. Ces méthodes sont décrites abondamment dans la littérature.

On pourra par exemple se référer aux documents FR2919375A1, FR2973858A1, FR2919375A1, et FR2928716 décrivant des stations de remplissage auxquelles la présente invention peut s'appliquer.

Les piles à combustible notamment du type « PEMFC » installées à bord des véhicules qui utilisent cet hydrogène carburant nécessitent d'être alimentées avec un hydrogène très pur. Une littérature abondante a décrit les impacts des impuretés (telles que l'eau, le CO, l'H2S) dans l'hydrogène sur les performances et la durée de vie des piles à combustible. Des normes strictes ont ainsi été développées pour s'assurer que l'hydrogène livré dans les réservoirs n'endommage pas les piles (cf. par exemple la norme ISO14687-2).

Les procédés de fabrication industriels connus et relativement peu couteux ne permettent pas d'assurer un tel niveau de pureté en continu.

Pour garantir un niveau de pureté de l'hydrogène il peut être nécessaire de rajouter en amont des stations de remplissage des étapes de purification extrêmement couteuses, telles que des purifications sur lit d'adsorbant fonctionnant à température cryogéniques ou des membranes de palladium.

Une autre solution consiste à approvisionner la station de remplissage avec de l'hydrogène liquide donc très pur ou via des électrolyseurs. Ces solutions sont cependant coûteuses.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'il comporte une étape de purification de l'hydrogène fourni par la source dans un organe de purification avant son transfert dans le au moins un contenant tampon, et en ce qu'il comporte une étape de transfert de frigories depuis ladite source froide vers l'hydrogène avant et/ou au cours de l'étape de purification.

Ceci permet d'utiliser une source d'hydrogène à priori non compatible avec les spécifications des piles à combustibles dans une station de remplissage en utilisant un système de purification de technologie standard ou non qui est pleinement intégré à la station.

L'utilisation conjointe de la source froide (groupe froid) pour le refroidissement du gaz de remplissage et du système de purification permet une économie et un fonctionnement particulièrement efficace de la station.

Par ailleurs, des modes de réalisation de l'invention peuvent comporter l'une ou plusieurs des caractéristiques suivantes :
- le transfert de frigories entre la source froide et l'hydrogène fourni au réservoir est réalisé via un premier échangeur de chaleur en échange thermique avec l'hydrogène du circuit et une boucle de circulation de fluide caloporteur entre la source froide et le premier échangeur de chaleur,
- le transfert de frigories depuis ladite source froide vers l'hydrogène avant et/ou au cours de l'étape de purification est réalisée via un second échangeur de chaleur en échange thermique et une boucle de circulation de fluide caloporteur entre la source froide et le second échangeur de chaleur,
- l'étape de purification utilise au moins un organe de purification parmi : un dispositif de séparation par adsorption par variation de pression (PSA ou TSA),
- la source froide comprend au moins l'un parmi : une réserve de gaz liquéfie tel que de l'azote, de l'éthylène glycol en solution aqueuse à différentes concentration massiques, de l'ammoniaque, du propane, ou tout autre fluide frigorifique,
- le circuit de la station de remplissage comprend au moins un organe de compression pour comprimer du gaz sous pression afin de remplir le au moins un contenant tampon,
- le procédé comporte une étape de transfert de calories entre d'une part le gaz comprimé à la sortie de l'organe de compression et d'autre part l'organe de purification,
- l'organe de purification fonctionne selon un cycle comprenant une phase de purification du gaz et une phase de régénération, l'étape de transfert de calories entre le gaz comprimé à la sortie de l'organe de compression et l'organe de purification est réalisée pendant la phase de régénération de l'organe de purification,
- le circuit de transfert sélectif de calories du gaz comprimé à la sortie de l'organe de compression vers l'organe de purification comprend un troisième échangeur de chaleur disposé à la sortie de l'organe de compression en échange thermique avec le gaz en sortie de l'organe de compression et une conduite de fluide caloporteur reliant sélectivement le troisième échangeur de chaleur à l'organe de purification et/ou au second échangeur de chaleur,

L'invention concerne également une station de remplissage pour réservoir d'hydrogène gazeux sous pression comprenant au moins un contenant tampon prévu pour contenir de l'hydrogène gazeux sous pression, un circuit fluidique comprenant une pluralité de vannes, le circuit étant relié audit au moins un contenant tampon et comprenant une première extrémité destinée à être raccordée à au moins une source d'hydrogène gazeux pour permettre le remplissage du au moins un contenant tampon avec du gaz fourni par la au moins une source, le circuit comprenant une seconde extrémité comprenant une conduite de remplissage destinée à être reliée de façon amovible à un réservoir pour remplir ledit réservoir à partir du au moins un contenant tampon, la station comprenant une source froide de frigories et un circuit de transfert sélectif de frigories de la source froide vers l'hydrogène au niveau de la seconde extrémité du circuit, la station comprenant également un circuit de transfert sélectif de frigories de la source froide vers l'hydrogène au niveau de la première extrémité du circuit, en amont et/ou au niveau de l'organe de purification.

Selon d'autres particularités possibles :
- le circuit de transfert sélectif de frigories de la source froide vers le gaz au niveau de la seconde extrémité du circuit comprend un premier échangeur de chaleur en échange thermique avec le gaz du circuit et une boucle de circulation de fluide caloporteur entre la source froide et le premier échangeur de chaleur,
- le circuit de transfert sélectif de frigories de la source froide vers l'hydrogène au niveau de la première extrémité du circuit, en amont et/ou au niveau de l'organe de purification comprend un second échangeur de chaleur en échange thermique et une boucle de circulation de fluide caloporteur entre la source froide et le second échangeur de chaleur,
- le premier échangeur de chaleur et le second échangeur de chaleur sont intégrés dans un même boîtier,
- le circuit de la station de remplissage comprend au moins un organe de compression tel compresseur pour comprimer de l'hydrogène afin de remplir le au moins un contenant tampon, l'organe de purification comprenant un ou plusieurs lits d'adsorbant de type à adsorption par variation de pression fonctionnant selon un cycle comprenant une phase de purification du gaz et une phase de régénération et en ce que la station comprend un circuit de transfert sélectif de calories de gaz comprimé à la sortie de l'organe de compression vers l'organe de purification.
- l'organe de purification comprend un dispositif de séparation par adsorption par variation de pression (PSA ou TPSA), comprenant plusieurs lits d'adsorbant de type fonctionnant cycliquement et de façon alternée, notamment un dispositif du type utilisant une adsorption par variation de pression et de température (TPSA),

L'invention peut concerner également tout dispositif ou procédé alternatif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 qui représente une vue schématique et partielle illustrant la structure et le fonctionnement d'une station de remplissage selon un exemple possible de réalisation de l'invention,
- la figure 2 représente une vue schématique et partielle, d'un détail de la station de la figure 1 selon un autre mode de réalisation possible.

La station 100 de remplissage représentée à titre d'exemple non limitatif est une station prévue pour assurer le remplissage de réservoirs 8 d'hydrogène gazeux à haute pression (par exemple à une pression comprise entre 300 et 850 bar).

Classiquement, la station 100 de remplissage comprend plusieurs contenant 1, 2 tampon (deux dans cet exemple non limitatif mais il peut y en avoir un, trois ou plus de trois).

Chaque contenant 1, 2 tampon est un réservoir ou ensemble de réservoirs prévu(s) pour contenir de l'hydrogène gazeux sous pression à une pression déterminée, par exemple respectivement 450 bar et 850 bar. La station 100 comprend un circuit 11, 12, 18, 4, 6 fluidique comportant une pluralité de conduites et de vannes. Le circuit est relié aux contenants 1, 2 tampon. Le circuit comprend une première extrémité 4 destinée à être raccordée à au moins une source de 14 d'hydrogène gazeux pour permettre le remplissage des contenants 1, 2 tampon avec du gaz provenant de la source 14.

La source 14 d'hydrogène peut comprendre classiquement au moins l'un parmi : un réseau de gaz d'hydrogène à une pression comprise entre 1.3 bar abs (bar absolu) et 200 bar abs, un organe de production d'hydrogène tel qu'un électrolyseur, un reformeur de gaz naturel (« SMR »), un dispositif de craquage de méthanol, un dispositif de reformage autotherme (« ATR »), un dispositif d'oxydation partiel (« POX »)...

Le circuit comprend une seconde extrémité munie d'au moins une conduite 6 de remplissage destinée à être reliée de façon amovible (via un raccord 66 approprié) à un réservoir 8 à remplir.

Plus précisément, les contenants tampon 1, 2, sont reliés en parallèle, via des vannes 11, 12 respectives, à la conduite 6 de remplissage.

De même, une, deux ou plus de deux sources 14 de gaz peuvent être reliées en parallèle via des vannes respectives à la conduite de remplissage 6 (au niveau de la première extrémité).

La conduite 6 de remplissage peut comporter, en amont du raccord 66, un compresseur 7. Plusieurs compresseurs en parallèle ou en série peuvent bien entendu envisagés également.

Le compresseur 7 peut être muni d'une vanne amont et d'une vanne aval (non représentées par soucis de simplification).

Comme représenté, une conduite 18 de dérivation du compresseur 7 peut être prévue. La conduite 18 de dérivation peut comporter deux vannes 20 et 19 et peut être la conduite collectrice qui raccorde les contenants 1, 2 tampon à la conduite 6 de remplissage.

Cette conduite 18 de dérivation permet également le remplissage des contenants 1, 2 tampon via le compresseur 7.

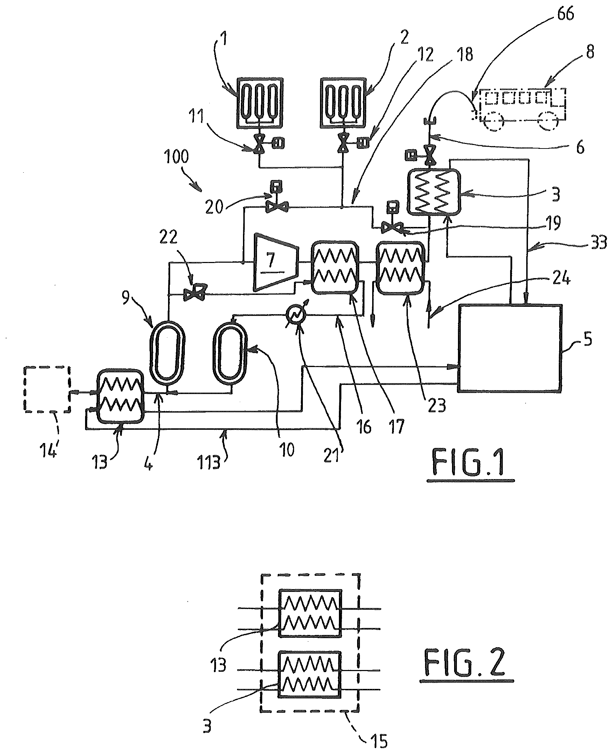

La station 100 comprend également, au niveau de la première extrémité 4, un organe 9, 10 de purification de l'hydrogène fourni par la source, de préférence en amont du compresseur 7. L'organe de purification comprend de préférence un dispositif connu de séparation par adsorption par variation de pression et de température (TPSA), comprenant un et de préférence plusieurs lits d'adsorbant (tamis moléculaire et/ou charbons actifs). Par exemple, été comme représenté, l'organe 9, 10 de purification comprend deux lits d'adsorbant (zéolites ou autres) disposés en parallèle dans le circuit. Le gaz fourni par la source 14 est admis alternativement dans l'un puis dans l'autre des adsorbants 9, 10 par un système de vannes, les adsorbants 9, 10 fonctionnent en alternance (régénération de l'un à dans des conditions relatives de haute température et de basse pression pendant l'adsorption dans des conditions relatives de basse température et de haute pression de l'autre). Par exemple il peut s'agir d'un TSA du type à lit coaxial. Par soucis de simplification, la figure 1 ne représente pas toutes les conduites et vannes nécessaires (connues par ailleurs) pour assurer la baisse en pression ou la montée en température des réservoirs 9 et 10 ainsi que le passage en mode production d'un adsorbeur 9, 10 à l'autre.

La station 100 comprend en outre, au niveau de la conduite 6 de transfert, un système de refroidissement sélectif (c'est-à-dire un refroidissement contrôlé) du gaz fourni au réservoir 8 (par exemple l'hydrogène est refroidi à une température basse comprise entre -196°C et -40°C). Comme représenté à la figure 1, ce refroidissement peut être réalisé classiquement via un premier échangeur 3 de chaleur en échange thermique avec le gaz du circuit et une boucle 33 de circulation de fluide caloporteur entre une source 5 froide et le premier 3 échangeur de chaleur. Classiquement, cette boucle 33 de circulation peut comprendre des vannes et/ou pompes qui ne sont pas représentées par soucis de simplification.

La source 5 froide peut comprendre au moins l'un parmi : une réserve de gaz liquéfie tel que de l'azote, de l'éthylène glycol en solution aqueuse à différentes concentration massiques, de l'ammoniaque, du propane, ou tout autre fluide frigorifique approprié.

La station 100 comprend en outre un transfert sélectif de frigories (sélectif c'est-à-dire qui de préférence peut être contrôlé en intensité selon les besoins de réfrigération) entre la source froide 5 et gaz avant ou au cours de l'étape de purification. A cet effet, la station 100 peut comprendre un second échangeur 13 de chaleur en échange thermique avec le gaz à l'entrée de l'organe 9, 10 de purification et une boucle 113 de circulation de fluide caloporteur entre la source 5 froide et le second échangeur 3 de chaleur. Bien entendu, tout autre système de refroidissement du gaz entrant dans l'organe 9, 10 de purification et/ou de refroidissement de l'organe 9, 10 du purification lui-même peut être prévu.

Ce refroidissement du gaz et/ou de l'organe 9, 10 de purification peut être particulièrement avantageux pour l'efficacité de ce dernier, notamment pour les dispositifs de purification par adsorption modulée en température (TSA) lors de la phase de purification (lors passage du gaz dans l'adsorbant et adsorption des impuretés).

Comme représenté, le circuit peut comprendre une conduite 16 de transfert munie d'une vanne 22 permettant de balayer un premier adsorbeur 9 avec du gaz (hydrogène) issu d'un second adsorbeur 10, pour assurer une étape d'élution de ce dernier en phase de régénération (une autre conduite de transfert non représentée peut être prévue pour assurer le balayage inverse du second l'adsorbeur 10 avec du gaz issu du premier adsorbeur 9).

Cette structure et ce fonctionnement permettent une mutualisation de la source 5 froide au sein de la station 100 et améliore l'efficacité de l'ensemble.

Les organes 9, 10 de purification peuvent le cas échéant nécessiter un réchauffement temporaire, par exemple des adsorbants du type TSA peuvent nécessiter un réchauffement lors de la phase de régénération (température comprise par exemple entre 200 et 300°C). A cet effet, la station 100 peut comporter en plus un système de transfert 16, 17 de calories entre d'une part le gaz comprimé à la sortie du compresseur 7 et d'autre part l'organe 9, 10 de purification. Par exemple, un troisième échangeur 17 de chaleur peut être prévu à la sortie de l'organe 7 de compression pour échanger thermiquement avec l'hydrogène comprimé et la conduite 16 de transfert peut transiter sélectivement dans ce troisième échangeur 17 de chaleur avant de balayer l'adsorbant 10 en phase de régénération.

De plus, un réchauffeur 21 additionnel du gaz peut être prévu facultativement. Par exemple un réchauffeur 21 électrique disposé dans la conduite 6 de transfert. Le réchauffeur 21 électrique est par exemple disposé en aval du troisième échangeur 17 selon le sens de circulation du gaz de balayage.

Ceci permet de réchauffer l'adsorbant 9, 10 tout en refroidissant le gaz en sortie de compresseur 7. Si besoin, en aval du troisième 17 échangeur de chaleur, le circuit peut comporter un quatrième 23 échangeur de refroidissement du gaz alimenté en fluide réfrigérant, par exemple via un circuit 24 d'eau.

Cette architecture assure un fonctionnement efficace économique de la station 100.

Le fonctionnement de la station 100 de remplissage peut comporter deux phases distinctes.

Dans une première phase de fonctionnement, le ou les contenants 1, 2 tampon peuvent être remplis avec du gaz. L'hydrogène gazeux fourni par la source 14 est purifié dans l'organe 9, 10 de purification puis comprimé et injecté dans les contenants 1, 2 tampons. Le remplissage commute d'un contenant 1, 2 à l'autre peut être fait lorsque la pression dans le contenant 1, 2 rempli atteint sa pression nominale (typiquement entre 450 et 850 bar). Un remplissage d'un contenant 1, 2 tampon peut commencer par exemple lorsque la pression en son sein passe sous un seuil (par exemple respectivement 350 et 700 bar. Les étapes ne se suivent pas forcement. Lors de cette première phase, la source 5 fournit de la puissance froide au second 13 échangeur de chaleur.

Dans une deuxième phase de fonctionnement un ou des réservoirs 8 sont remplis par la station 100. Par exemple un réservoir 8 est rempli jusqu'à une pression de 700bar. Le réservoir 8 est mis en équilibre successivement avec les contenants 1, 2 tampon. La commutation d'un contenant 1, 2 tampon à l'autre peut être réalisée lorsque la différence de pression le contenant 1, 2 tampon et le réservoir 8 de destination est inférieure à un seuil prédéfini. En fonction de la pression initiale dans le réservoir 8, des étapes d'équilibrage de pression peuvent être omise. De façon connue, si besoin et facultativement, le compresseur 7 peut compléter ou suppléer ce remplissage. Durant cette seconde phase la source 5 froide fournit de la puissance froide au premier échangeur 3 de chaleur.

Ainsi, un même groupe froid 5 peut être prévu pour fournir de la puissance froide aux premier 3 et second 13 échangeurs de chaleur et refroidir à la fois le gaz pour sa purification et le gaz purifié en cours de remplissage.

Comme illustré à la figure 2 schématiquement, les premier 3 et second 13 échangeurs de chaleur peuvent avantageusement partager la même calandre, c'est-à-dire être intégré au sein d'une même entité physique formant un échangeur de chaleur unique dans la station.

En variante, un fluide de refroidissement peut refroidir directement l'adsorbeur 9, 10 lorsqu'il est en mode de production.

De même, un échangeur de chaleur (non représenté) peut être prévu optionnellement à l'entrée du compresseur 7 pour le cas échéant réchauffer le gaz si le compresseur ne tolère pas du gaz froid.

L'invention permet de diminuer le coût, l'encombrement et la consommation énergétique de la station de remplissage.

## Revendications

1. Procédé de remplissage d'un réservoir (8) avec de l'hydrogène sous pression via une station (100) de remplissage comprenant au moins un contenant tampon (1, 2) et un circuit (11, 12, 4, 6) fluidique relié audit au moins un contenant (1, 2) tampon, le circuit (11, 12, 4, 6) de la station (100) de remplissage comprenant une première extrémité (4) reliée à au moins une source (14) d'hydrogène gazeux pour assurer le remplissage du au moins un contenant (1, 2) tampon par du gaz provenant de la source (14), le circuit (11, 12, 4, 6) comprenant une seconde extrémité munie d'une conduite (6) de transfert destinée à être reliée de façon amovible au réservoir (8) à remplir avec de l'hydrogène provenant du au moins un contenant tampon (1, 2), le procédé comprenant une étape de refroidissement (3) de l'hydrogène fourni au réservoir (8) par transfert de frigories entre une source (5) froide et l'hydrogène, le procédé comportant une étape de purification de l'hydrogène fourni par la source (14) dans un organe (9, 10) de purification et une étape de transfert (13) de frigories depuis ladite source froide (5) vers l'hydrogène avant et/ou au cours de l'étape de purification, **caractérisé en ce que** l'étape de purification est effectuée avant le transfert de l'hydrogène dans le au moins un contenant tampon, et utilise au moins un organe de purification parmi : un dispositif de séparation par adsorption par variation de pression (PSA ou TSA).

2. Procédé selon la revendication 1, **caractérisé en ce que** le transfert de frigories entre la source (5) froide et l'hydrogène fourni au réservoir (8) est réalisée via un premier échangeur (3) de chaleur en échange thermique avec l'hydrogène du circuit et une boucle (33) de circulation de fluide caloporteur entre la source (5) froide et le premier (3) échangeur de chaleur.

3. Procédé selon la revendication 1 ou 2, **caractérisé en ce que** le transfert de frigories depuis ladite source froide (5) vers l'hydrogène avant et/ou au cours de l'étape de purification est réalisée via un second échangeur (13) de chaleur en échange thermique et une boucle (113) de circulation de fluide caloporteur entre la source (5) froide et le second échangeur (3) de chaleur.

4. Procédé selon l'une quelconque des revendications 1 à 3, **caractérisé en ce que** la source (5) froide comprend au moins l'un parmi : une réserve de gaz liquéfié tel que de l'azote, de l'éthylène glycol en solution aqueuse à différentes concentration massiques, de l'ammoniaque, du propane, ou tout autre fluide frigorifique.

5. Procédé selon l'une quelconque des revendications 1 à 4, **caractérisé en ce que** le circuit (11, 12, 4, 6) de la station (100) de remplissage comprend au moins un organe (7) de compression pour comprimer du gaz sous pression afin de remplir le au moins un contenant (1, 2) tampon.

6. Procédé selon l'une quelconque des revendications 1 à 5, **caractérisé en ce qu'**il comporte une étape de transfert (16) de calories entre d'une part le gaz comprimé à la sortie de l'organe (7) de compression et d'autre part l'organe (9, 10) de purification.

7. Procédé selon la revendication 6, **caractérisé en ce que** l'organe (9, 10) de purification fonctionne selon un cycle comprenant une phase de purification du gaz et une phase de régénération et **en ce que** l'étape de transfert (16) de calories entre le gaz comprimé à la sortie de l'organe (7) de compression et l'organe (9, 10) de purification est réalisée pendant la phase de régénération de l'organe (9, 10) de purification.

8. Station de remplissage pour réservoir d'hydrogène gazeux sous pression comprenant au moins un contenant (1, 2) tampon prévu pour contenir de l'hydrogène gazeux sous pression, un circuit (11, 12, 18, 4, 6) fluidique comprenant une pluralité de vannes, le circuit (11, 12, 18, 4, 6) étant relié audit au moins un contenant (1, 2) tampon et comprenant une première extrémité destinée à être raccordée à au moins une source (14) d'hydrogène gazeux pour permettre le remplissage du au moins un contenant (1, 2) tampon avec du gaz fourni par la au moins une source (14), le circuit (11, 12, 18, 4, 6) comprenant une seconde extrémité comprenant une conduite (6) de remplissage destinée à être reliée de façon amovible à un réservoir (8) pour remplir ledit réservoir (8) à partir du au moins un contenant tampon (1, 2), la station (100) comprenant une source (5) froide de frigories et un circuit (33, 3) de transfert sélectif de frigories de la source (5) froide vers l'hydrogène au niveau de la seconde extrémité du circuit, la station (100) étant **caractérisée en ce qu'**elle comprend également un organe (9,10) de purification de l'hydrogène parmi : un dispositif de séparation par adsorption par variation de pression (PSA ou TSA) et un circuit (113, 13) de transfert sélectif de frigories de la source (5) froide vers l'hydrogène au niveau de la première extrémité du circuit, en amont et/ou au niveau de l'organe (9, 10) de purification.

9. Station selon la revendication 8, **caractérisée en ce que** le circuit (33, 3) de transfert sélectif de frigories de la source (5) froide vers le gaz au niveau de la seconde extrémité du circuit comprend un premier échangeur (3) de chaleur en échange thermique avec le gaz du circuit et une boucle (33) de circulation de fluide caloporteur entre la source (5) froide et le premier (3) échangeur de chaleur.

10. Station selon la revendication 8 ou 9, **caractérisée en ce que** le circuit (113, 13) de transfert sélectif de frigories de la source (5) froide vers l'hydrogène au niveau de la première extrémité du circuit, en amont et/ou au niveau de l'organe (9, 10) de purification comprend un second échangeur (13) de chaleur en échange thermique et une boucle (113) de circulation de fluide caloporteur entre la source (5) froide et le second échangeur (13) de chaleur.

11. Station selon les revendications 9 et 10 prises en combinaison, **caractérisée en ce que** le premier (3) échangeur de chaleur et le second (13) échangeur de chaleur sont intégrés dans un même boîtier (15).

12. Station selon l'une quelconque des revendications 8 à 11, **caractérisé en ce que** le circuit (11, 12, 4, 6) de la station (100) de remplissage comprend au moins un organe (7) de compression tel compresseur pour comprimer de l'hydrogène afin de remplir le au moins un contenant (1, 2) tampon et **en ce que** l'organe (9, 10) de purification comprend un ou plusieurs lits d'adsorbant de type à adsorption par variation de pression (PSA, TSA) fonctionnant selon un cycle comprenant une phase de purification du gaz et une phase de régénération et **en ce que** la station comprend un circuit (6) de transfert sélectif de calories de gaz comprimé à la sortie de l'organe (7) de compression vers l'organe (9, 10) de purification.

## Patentansprüche

1. Verfahren zur Befüllung eines Behälters (8) mit druckbeaufschlagtem Wasserstoff über eine Befüllungsstation (100), die mindestens einen Pufferbehälter (1, 2) und einen mit dem mindestens einen Pufferbehälter (1, 2) verbundenen fluidischen Kreislauf (11, 12, 4, 6) umfasst, wobei der Kreislauf (11, 12, 4, 6) der Befüllungsstation (100) ein erstes Ende (4) umfasst, das mit mindestens einer Quelle (14) für Wasserstoffgas verbunden ist, um das Befüllen des mindestens einen Pufferbehälters (1, 2) mit dem aus der Quelle (14) stammenden Gas sicherzustellen, wobei der Kreislauf (11, 12, 4, 6) ein zweites Ende umfasst, das mit einer Transferleitung (6) versehen ist, die dazu vorgesehen ist, abnehmbar mit dem Behälter (8) verbunden zu werden, der mit dem aus dem mindestens einen Pufferbehälter (1, 2) stammenden Wasserstoff befüllt werden soll, wobei das Verfahren einen Kühlschritt (3) des dem Behälter (8) zugeführten Wasserstoffs durch Transfer von Frigorien zwischen einer Kältequelle (5) und Wasserstoff umfasst, wobei das Verfahren einen Reinigungsschritt des von der Quelle (14) zugeführten Wasserstoffs in einem Reinigungsorgan (9, 10) und einen Übertragungsschritt (13) von Frigorien von der Kältequelle (5) zu dem Wasserstoff vor und/oder während des Reinigungsschritts umfasst, **dadurch gekennzeichnet, dass** der Reinigungsschritt vor dem Transfer des Wasserstoffs in den mindestens einen Pufferbehälter durchgeführt wird und mindestens ein Reinigungsorgan verwendet aus: einer Vorrichtung zur Trennung mittels Druckwechseladsorption (PSA oder TSA).

2. Verfahren nach Anspruch 1, **dadurch gekennzeichnet, dass** der Transfer von Frigorien zwischen der Kältequelle (5) und dem dem Behälter (8) zugeführten Wasserstoff über einen ersten Wärmeaustauscher (3) im Wärmeaustausch mit dem Wasserstoff des Kreislaufs und eine Zirkulationsschleife (33) von Wärmeträgerfluid zwischen der Kältequelle (5) und dem ersten (3) Wärmeaustauscher erfolgt.

3. Verfahren nach Anspruch 1 oder 2, **dadurch gekennzeichnet, dass** der Transfer von Frigorien von der Kältequelle (5) zu dem Wasserstoff vor und/oder während des Reinigungsschritts über einen zweiten Wärmeaustauscher (13) im Wärmeaustausch und eine Zirkulationsschleife (113) von Wärmeträgerfluid zwischen der Kältequelle (5) und dem zweiten Wärmeaustauscher (3) erfolgt.

4. Verfahren nach einem der Ansprüche 1 bis 3, **dadurch gekennzeichnet, dass** die Kältequelle (5) mindestens eines umfasst aus: einer Reserve an Flüssiggas wie Stickstoff, Ethylenglykol in wässriger Lösung mit unterschiedlichen Massenkonzentrationen, Ammoniak, Propan oder einem beliebigen anderen Kühlmittelfluid.

5. Verfahren nach einem der Ansprüche 1 bis 4, **dadurch gekennzeichnet, dass** der Kreislauf (11, 12, 4, 6) der Befüllungsstation (100) mindestens ein Verdichtungsorgan (7) zum Verdichten von druckbeaufschlagtem Gas umfasst, um den mindestens einen Pufferbehälter (1, 2) zu befüllen.

6. Verfahren nach einem der Ansprüche 1 bis 5, **dadurch gekennzeichnet, dass** es einen Kalorientransferschritt (16) zwischen dem verdichteten Gas am Ausgang des Verdichtungsorgans (7) einerseits und dem Reinigungsorgan (9, 10) andererseits aufweist.

7. Verfahren nach Anspruch 6, **dadurch gekennzeichnet, dass** das Reinigungsorgan (9, 10) nach einem Zyklus arbeitet, der eine Gasreinigungsphase und eine Regenerationsphase umfasst, und dass der Kalorientransferschritt (16) zwischen dem verdichteten Gas am Ausgang des Verdichtungsorgans (7) und dem Reinigungsorgan (9, 10) während der Regenerationsphase des Reinigungsorgans (9, 10) erfolgt.

8. Befüllungsstation für einen druckbeaufschlagten Wasserstoffgasbehälter, umfassend mindestens einen Pufferbehälter (1, 2), der dazu bestimmt ist, druckbeaufschlagtes Wasserstoffgas zu enthalten, einen fluidischen Kreislauf (11, 12, 18, 4, 6), umfassend eine Vielzahl von Ventilen, wobei der Kreislauf (11, 12, 18, 4, 6) mit dem mindestens einen Pufferbehälter (1, 2) verbunden ist und ein erstes Ende umfasst, das dazu vorgesehen ist, an mindestens eine Quelle (14) für Wasserstoffgas angeschlossen zu werden, um das Befüllen des mindestens einen Pufferbehälters (1, 2) mit Gas zu ermöglichen, das von der mindestens einen Quelle (14) zugeführt wird, wobei der Kreislauf (11, 12, 18, 4, 6) ein zweites Ende umfasst, das eine Befüllungsleitung (6) umfasst, die dazu vorgesehen ist, abnehmbar mit einem Behälter (8) verbunden zu werden, um den Behälter (8) aus dem mindestens einen Pufferbehälter (1, 2) zu befüllen, wobei die Station (100) eine Kältequelle (5) für Frigorien und einen Kreislauf (33, 3) zum selektiven Transfer von Frigorien von der Kältequelle (5) zu dem Wasserstoff im Bereich des zweiten Endes des Kreislaufs umfasst, wobei die Station (100) **dadurch gekennzeichnet ist, dass** sie auch ein Reinigungsorgan (9, 10) des Wasserstoffs umfasst aus: einer Vorrichtung zur Trennung mittels Druckwechseladsorption (PSA oder TSA) und einem Kreislauf (113, 13) zum selektiven Transfer von Frigorien von der Kältequelle (5) zu dem Wasserstoff im Bereich des ersten Endes des Kreislaufs, stromaufwärts und/oder im Bereich des Reinigungsorgans (9, 10).

9. Station nach Anspruch 8, **dadurch gekennzeichnet, dass** der Kreislauf (33, 3) zum selektiven Transfer von Frigorien von der Kältequelle (5) zu dem Gas im Bereich des zweiten Endes des Kreislaufs einen ersten Wärmeaustauscher (3) im Wärmeaustausch mit dem Gas im Kreislauf und eine Zirkulationsschleife (33) von Wärmeträgerfluid zwischen der Kältequelle (5) und dem ersten (3) Wärmeaustauscher umfasst.

10. Station nach Anspruch 8 oder 9, **dadurch gekennzeichnet, dass** der Kreislauf (113, 13) zum selektiven Transfer von Frigorien von der Kältequelle (5) zu dem Wasserstoff im Bereich des ersten Endes des Kreislaufs, stromaufwärts und/oder im Bereich des Reinigungsorgans (9, 10), einen zweiten Wärmeaustauscher (13) im Wärmeaustausch und eine Zirkulationsschleife (113) von Wärmeträgerfluid zwischen der Kältequelle (5) und dem zweiten Wärmeaustauscher (3) umfasst.

11. Station nach Anspruch 9 und 10 kombiniert, **dadurch gekennzeichnet, dass** der erste (3) Wärmeaustauscher und der zweite (13) Wärmeaustauscher in ein und demselben Gehäuse (15) integriert sind.

12. Station nach einem der Ansprüche 8 bis 11, **dadurch gekennzeichnet, dass** der Kreislauf (11, 12, 4, 6) der Befüllungsstation (100) mindestens ein Verdichtungsorgan (7), wie beispielsweise einen Kompressor zum Verdichten von Wasserstoff, umfasst, um den mindestens einen Pufferbehälter (1, 2) zu befüllen, und dass das Reinigungsorgan (9, 10) ein oder mehrere Adsorptionsmittelbetten vom Typ der Druckwechseladsorption (PSA, TSA) umfasst, die nach einem Zyklus arbeiten, der eine Gasreinigungsphase und eine Regenerationsphase umfasst, und dass die Station einen Kreislauf (6) für selektiven Transfer von Kalorien von verdichtetem Gas am Ausgang des Verdichtungsorgans (7) zum Reinigungsorgan (9, 10) umfasst.

## Claims

1. Method for filling a tank (8) with pressurised hydrogen via a filling station (100) comprising at least one buffer container (1, 2) and a fluid circuit (11, 12, 4, 6) connected to said at least one buffer container (1, 2), the circuit (11, 12, 4, 6) of the filling station (100) comprising a first end (4) connected to at least one source (14) of hydrogen gas to ensure the filling of the at least one buffer container (1, 2) by gas coming from the source (14), the circuit (11, 12, 4, 6) comprising a second end provided with a transfer pipe (6) intended to be connected removably to the tank (8) that is to be filled with hydrogen coming from the at least one buffer container (1, 2), the method comprising a step of cooling (3) the hydrogen supplied to the tank (8) by transferring frigories between a cold source (5) and the hydrogen, the method comprising a step of purifying the hydrogen supplied by the source (14) in a purification member (9, 10) and a step of transferring (13) frigories from said cold source (5) to the hydrogen before and/or during a purification step, **characterised in that** the purification step is carried out before the transfer of the hydrogen in the at least one buffer container, and uses at least one purification member from among: a device for separating by pressure swing adsorption (PSA or TSA).

2. Method according to claim 1, **characterised in that** the transferring of frigories between the cold source (5) and the hydrogen supplied to the tank (8) is carried out via a first heat exchanger (3) in thermal exchange with the hydrogen of the circuit and a heat transfer fluid circulation loop (33) between the cold source (5) and the first heat exchanger (3).

3. Method according to claim 1 or 2, **characterised in that** the transferring of the frigories from said cold source (5) to the hydrogen before and/or during the purification step is carried out via a second heat exchanger (13) in thermal exchange and a heat transfer fluid circulation loop (113) between the cold source (5) and the second heat exchanger (3).

4. Method according to any of claims 1 to 3, **characterised in that** the cold source (5) comprises at least one from among: a tank of liquefied gas such as nitrogen, ethylene glycol in an aqueous solution at different mass concentrations, ammonia, propane, or any other refrigerant.

5. Method according to any of claims 1 to 4, **characterised in that** the circuit (11, 12, 4, 6) of the filling station (100) comprises at least one compression member (7) for compressing pressurised gas in order to fill the at least one buffer container (1, 2).

6. Method according to any of claims 1 to 5, **characterised in that** it comprises a step of transferring (16) calories between on the one hand the compressed gas at the outlet of the compression member (7) and on the other hand the purification member (9, 10).

7. Method according to claim 6, **characterised in that** the purification member (9, 10) operates according to a cycle comprising a phase of purifying the gas and a regenerating phase, and **in that** the step of transferring (16) calories between the compressed gas at the outlet of the compression member (7) and the purification member (9, 10) is carried out during the phase of regenerating the purification member (9, 10).

8. Filling station for a pressurised hydrogen gas tank comprising at least one buffer container (1, 2) provided to contain the pressurised hydrogen gas, a fluid circuit (11, 12, 18, 4, 6) comprising a plurality of valves, the circuit (11, 12, 18, 4, 6) being connected to said at least one buffer container (1, 2) and comprising a first end intended to be connected to at least one source (14) of hydrogen gas to make it possible for the filling of the at least one buffer container (1, 2) with gas supplied by the at least one source (14), the circuit (11, 12, 18, 4, 6) comprising a second end comprising a filling pipe (6) intended to be connected removably to a tank (8) to fill said tank (8) from at least one buffer container (1, 2), the station (100) comprising a cold source (5) of frigories and a circuit (33, 3) for the selective transferring of frigories from the cold source (5) to the hydrogen on the second end of the circuit, the station (100) being **characterised in that** it also comprises a purification member (9, 10) of the hydrogen from among: a device for separating by pressure swing adsorption (PSA or TSA) and a circuit (113, 13) for selectively transferring frigories from the cold source (5) to the hydrogen on the first end of the circuit, upstream and/or on the purification member (9, 10).

9. Station according to claim 8, **characterised in that** the circuit (33, 3) for the selective transferring of frigories from the cold source (5) to the gas on the second end of the circuit comprises a first heat exchanger (3) in thermal exchange with the gas of the circuit and a heat transfer circulation loop (33) between the cold source (5) and the first (3) heat exchanger.

10. Station according to claim 8 or 9, **characterised in that** the circuit (113, 13) for selectively transferring frigories from the cold source (5) to the hydrogen on the first end of the circuit, upstream and/or on the purification member (9, 10) comprises a second heat exchanger (13) in thermal exchange and a heat transfer fluid circulation loop (113) between the cold source (5) and the second heat exchanger (3).

11. Station according to claims 9 and 10 combined, **characterised in that** the first heat exchanger (3) and the second heat exchanger (13) are integrated into one same case (15).

12. Station according to any of claims 8 to 11, **characterised in that** the circuit (11, 12, 4, 6) of the filling station (100) comprises at least one compression member (7) such as a compressor to compress the hydrogen in order to fill the at least one buffer container (1, 2) and **in that** the purification member (9, 10) comprises one or more adsorbent beds of the pressure swing adsorption type (PSA, TSA) operating according to a cycle comprising a phase of purifying the gas and a regenerating phase, and **in that** the station comprises a circuit (6) for the selective transferring of calories of compressed gas at the outlet of the compression member (7) to the purification member (9, 10).
